# EUROPEAN PATENT APPLICATION

(11) **EP 4 424 618 A1**
(43) Date of publication of application: **04.09.2024**
(21) Application number: 22884811.5
(22) Date of filing: 17.10.2022
(51) Int. Cl.: B65G 23/23

(54) **LINEAR DRIVE FOR CONTINUOUS BULK MATERIAL CONVEYING DEVICE**

(30) Priority: 27.10.2021 BR 102021021562
(71) Applicant: HAKA GROUPS PARTICIPAÇOES DE NEGÓCIOS S/A, 30494310 Belo Horizonte (BR)
(72) Inventor: TRAD, Frederico, NOVA LIMA (BR)
(74) Representative: Pereira Garcia, João Luís
(86) International application number: PCT/BR2022/050399
(87) International publication number: WO 2023/070183

(57) **Abstract**

This invention relates to a double-face linear motor with a short primary and a segmented secondary designed for use in belt conveyors, where rotary motors are predominantly used. In this invention, the primary remains fixed and static, firmly connected to the conveyor structure, and the secondary must follow the belt that moves in a closed loop in a vertical plane around return drums. This motor can improve the efficiency of conventional conveyor belts that use rotary electric motor units in their head drums. The driving method consists in electromagnetically moving by induction the secondary blades made of a conducting material as they pass between the active faces of the motor primary, where multiphase coils are arranged. The secondary blades are fastened to the travelling belt and move the belt by means of the electromagnetic forces generated in the primary. The long segmented secondary makes a distributed linear drive possible because the segments formed by the blades adapt to the loop path formed by the return drum of the belts. The use of this equipment for conveying granulated materials, such as those from mining activities, requires a number of protective measures in order to ensure the good operation of the machine.

## Description

### FIELD OF THE INVENTION

This invention belongs to the field of electrical engineering with applications in transportation engineering. It involves the use of a linear induction motor with an active double-faced primary and a new geometry of the linear motor secondary to enable the use of this type of motor in linear movement that performs a closed-loop motion.

### PRIOR ART

Linear transport equipment, such as conventional belt conveyors, uses rotary motors located at the head of the conveyor, coupled to the drum drive shaft of the conveyor. This configuration results in a series of inefficiencies in the transport system, such as the use of tensioners to generate mechanical tension in the belt and generate enough friction on the drive drum to prevent slippage during conveyor operation.

Such an increase in load causes friction, wear, increased energy consumption, and other inconveniences for machinery operation.

The proposed solution involves the use of linear motors distributed along the conveyor to maintain constant traction over the entire length of the belt and, thus, reduce the need for conventional tensioners.

Another issue presented by traditional belt conveyors with rotary motors in aggressive environments is the entry of contaminants through the motor shaft, leading to the deterioration of both bearings and the electrical components of the motor.

The proposed invention is more resistant to dust and debris since the linear motor can be considered an open motor with a larger iron distance and protected against contaminants through resin impregnation. This reduces or eliminates the problem of motor failure due to particle and water infiltration.

Traditional linear conveyors driven by a rotary motor at their head have another inconvenience: only one operating direction since flexible conveyors must operate by traction on the drive drum and not by compression, which would cause deformation in the conveyor and not movement. This fact imposes an operating direction on these devices without the possibility of reversing the operating direction without a physical modification in the equipment, such as installing another motor set at the other end of the conveyor, in its return drum. This makes conveyors that operate in two directions have 2 motor sets, and one of these sets is idle during the operation of the other.

With linear drive through linear motors distributed along the conveyor, this problem is eliminated, and the conveyor can operate in both directions without leaving any motor idle in both directions. This is possible because each unit can be controlled individually and together, forming a driving wave in the desired direction with the involvement of all linear motors, preventing deformation of the conveyor belt and resulting in a greater operational advantage.

Linear motors are electric motors that have the same components as rotary electric motors, but they perform linear movement relative to the parts.

The secondary of a linear motor corresponds to the rotor of a conventional induction rotary motor, and the primary of the linear motor is where the windings and the iron core are located.

Linear motors are generally low-power motors and have advantages in the direct application of linear movement without the need to convert rotary motion.

The linear motor of this invention has a modification in its secondary element that allows its application in linear movement in a loop, such as that performed by linear conveyors. They can be implemented in flexible conveyors rubber, metallic conveyors, vertical or horizontal conveyors, and also in short or long-haul conveyors due to their linear distribution and the versatility of installation of these motors, which were designed to be installed in the intervals between rollers of these types of conveyors.

The secondary presented has the characteristic of not being a continuous element but is divided into several blades forming a train of plates. This proposed train can still be in two forms:

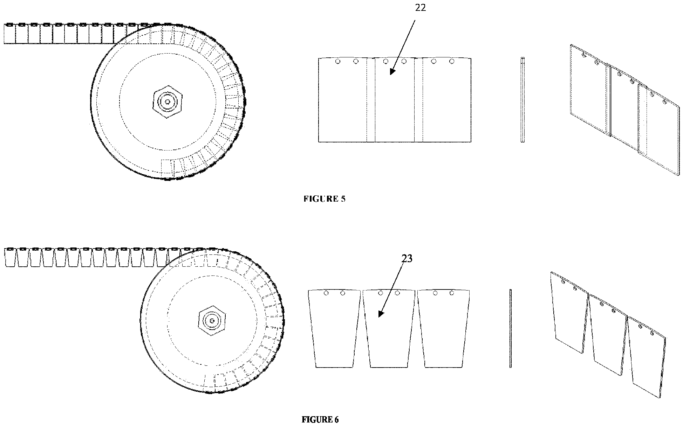

The first is plates of approximately rectangular shape with some overlap between them, allowing the accommodation in the plate train in the return drum (fig. 5) of the equipment to be pulled, such as a conveyor belt.

The second is trapezoidal plates with their larger base to be fixed on the conveyor belt and the smaller base pointing to the inner part of the loop. This configuration also allows the accommodation of the train in the return drums of the linear conveyor (fig. 6).

The proposed invention is designed to operate in aggressive environments such as the mining environment where dust, liquids, and debris may be present. For this, the motor has a series of protection items that allow its safe operation in this type of environment.

### DESCRIPTION OF THE PRIOR ART

The developed invention sought technical subsidies in other works disclosed in articles and other patents, finding no similarity in these publications.

Thus, the necessary requirements were developed to allow the full use of this motor with a modified secondary in equipment that currently uses conventional rotary motorization in its operation.

The motors described as prior art have clear differences in the type of primary and secondary, with the vast majority of the found publications being of the synchronous motor type, step motors, or secondaries with the use of permanent magnets, which disqualifies any competition with the proposed invention.

### Prior Art

1982 | HPGK: Linear Motor [PI8103086]: "The invention relates to a linear motor comprising an armature and a stator, each adapted to provide a sequence of North and South poles along the length of the motor. The pole spacing of the stator magnets is different from that of the armature coils, so that, with proper excitation of said coils, this difference in pole spacing and stator can result in a net thrust of the armature relative to the stator in a convenient direction at any location within a range of relative longitudinal positions of the armature and stator." This motor does not compete with the proposed invention as it is characterized by the use of permanent magnets in the stator, therefore being another type of equipment.

1983 | FIPAI: Linear Step Motor [PI 8105580-3 A2]: "The present invention relates to a toothed core of soft ferromagnetic material, with smaller or larger spacing in relation to the arrangement of the various surrounding cores along the core, also made of soft ferromagnetic material and excited each by electrical coils. With the progressive excitation of the coils, a stepped magnetic field is formed that acts on the teeth of the core, linearly displacing it due to the phase shift of the teeth of the core with the U-shaped core." This patent deals with a step linear motor applied to motion control problems. It differs, therefore, in the type of motor and its application.

1985|JENS: Linear electric motor with fixed coils for alternating current [PI 8302826-9]: "Patent for the invention of a linear motor comprising two cores with their respective excitation coils connected directly to the alternating current, which move a magnetized piston in a constant direction, along the axis. In versions suitable for high power, the piston has its own magnetization coil that is connected to alternating current by a full-wave rectifier bridge; it also has two core segments that complete the magnetic circuit and its mechanical assembly; and also has two springs fitted within two cavities in the cores that store the piston's kinetic moment when the motor is used as a vibrator." Such a motor does not have any characteristics similar to the proposed invention other than the fact that it is a type of linear motor.

1985|UTDC: Primary element for linear induction motor and primary element for single-sided linear induction motor [PI 8504327-3]: "it is the objective of the present invention to present a primary element of a linear induction motor in the which disadvantages [such as the problem encountered with the use of such engines in the transportation field with the energy dissipated as heat by the engine and the problems associated with removing that heat] be eliminated or mitigated." This patent is characterized by the technique of cooling the primary of linear motors through the insertion of forced mechanical ventilation, in addition it has a single side which makes it different from the proposed invention.

1989|DuPont: Useful system for controlling multiple synchronous secondaries of a linear motor of an elongated path - [PI 8707773-6]: "A useful system for controlling multiple secondaries of a linear larger disposed along an elongated path with the system having a linear synchronous motor with its elongated primary disposed along the elongated path and at least one secondary responsive to the primary." This patent is characterized by a synchronous linear motor with a long primary and multiple short secondaries and an independent carriage format and, therefore, totally different from the proposed invention.

1991|DuPont: Linear motor propulsion system - [PI 8907872-1]: "The Invention presents a system for propulsion of individual cars along an endless path, of a first speed contiguous in a stack in section gathering of cars, to a second speed apart in the operational section and to a third speed in a gathering forming section, where the cars return to the first speed in the gathering. New cars are propelled by a linear motor in which each car has a synchronous and a hysteresis secondary attached. A first primary positioned adjacent to one part of the path develops electromagnetic waves for engagement with the synchronous secondaries to provide a controlled separation of the cars, and a second primary adjacent to another part of the path develops other electromagnetic waves for engagement with the secondaries of hysteresis, in order to provide controlled contiguity of the cars." This patent is characterized by a synchronous and hysteresis Linear Motor with a long primary and multiple independent short secondaries and is therefore different from this patent.

1996|Shoichi Hara: Belt Conveyor - [JPH10231009A]:"Problem to be solved: using a linear motor to drive a contactless conveyor belt with noise reduction. Solution: A conveyor belt 2 acted as a secondary conductor is transported between rollers 1 arranged in parallel. An electromagnet is arranged at the rear of the conveyor belt located in a conveyor area to use a drive source such as a single-sided linear motor with the conveyor belt. An air gap in a flat shape is arranged on the electromagnet. Air is blown from a series of small holes drilled into the upper face of the air box to levitate and support the conveyor belt." It is a conveyor belt that levitates on an air cushion and is propelled by a linear motor that uses the belt itself as a secondary motor, which contains permanent magnets, and in this way, it differs completely from the proposed invention.

1998 | LG: Magnetic Assembly for Linear Motor - [PI 9605555-3]: "This is a magnetic assembly for a linear motor, which is capable of facilitating assembly and increasing reliability by fixing magnets to a cylindrical magnetic housing to form a magnetic assembly, and which includes a magnetic housing and a plurality of magnets fixed to a peripheral surface of the magnetic housing." This patent is characterized by a linear motor with permanent magnets in the secondary and mounted on a cylindrical housing, therefore being another type of linear motor.

2005|VM: Linear synchronous motor with multiple time constant circuits, a secondary synchronous stator member and improved method for mounting permanent magnets - [PI 0311239-0]: "The present invention relates to a linear synchronous motor consisting of a specific main and a secondary part. The secondary portion is a ferromagnetic counter plate. An array of permanent magnets is connected to the counter plate so that a variable or fixed polar pitch occurs in a precise manner between at least two magnets of alternating polarity, which improves existing methods for connecting, guiding, protecting and enhancing the array. of total flux produced and emitted by the permanent magnets. A one-piece electrically synchronous linear secondary stator member accompanies a main member, the synchronous linear permanent magnet motor. The stator electrical frequency is adaptable to allow for a wide variety of braking applications." This patent is characterized by a synchronous linear motor with a long armature. Also used as an electrodynamic brake for elevators as well as entertainment transports such as descent towers, roller coasters and any other mobile device that requires reliable, high-thrust braking applications. Thus configuring another type of equipment.

2006|Hoganas AB: Stator Core for Linear Motor [PI 0408267-2]: "The invention relates to a linear motor comprising a stator core and/or a conductor. The stator core of said linear motor comprises an inner perimeter, an outer perimeter essentially surrounding the inner perimeter, a first and a second tooth being disposed along one of the inner perimeter and the outer perimeter, a slot for receiving a coil of stator, said slot being a cavity disposed within the stator core, wherein said stator core is divided into a first stator part and a second stator part, said first stator part including the first tooth, being arranged to partially defining the slot, and being made of soft magnetic powder and said second stator part including the second tooth, being made to partially define the slot, and being made of soft magnetic powder." This patent is characterized by a tubular Linear Motor segmented into rings. The topology can allegedly have countless (star, oval, etc.) shapes for which applications are not reported, or even envisaged. Therefore, it is a different engine from the invention of this document.

2006 | Klessmann Holzbearbeitungssysteme GmbH: Workpiece transport device with at least one endlessly circulating chain - [DE102005019036A1]: "In such a transport device, guide devices are provided in the orbit of the chain to which an upper wire of the chains supporting the rail for the rollers of the chain links can be attached. In order to drive the chain as vibration-free as possible, a linear drive corresponding to an electromagnetic linear motor is provided, including the relatively movable primary and secondary parts of the linear drive are arranged in the orbit of the chain and in the chain links." This patent uses a synchronous motor with permanent magnet secondary, which constitutes another type of linear motor and, therefore, different from the innovation proposed in this document.

2008|Beerre: Linear Hydraulic Motor and Alternating Conveyor Belt - [PI 05169259]: "Represented by an inventive solution composed of a linear hydraulic motor including an elongated cylinder and at least one sliding piston located within the cylinder. The piston has a longitudinally extended portion that fits loosely in the cylinder and describes a path that penetrates an inner region of the cylinder that extends radially and internally from the opening of the cylinder wall. An internal reinforcing member is located inside the cylinder to move with the piston. The reinforcing member describes a path that also penetrates such an interior zone of the cylinder that extends radially and internally from the opening in the cylinder wall and the reinforcing member has portions that are concentric and radially aligned with circumferentially spaced portions of the cylinder wall that are on opposite sides of such opening in the cylinder wall." This patent is characterized by a Hydraulic System with rectilinear movement provided by constitutively linear machinery. Topology not relevant, in whole or in part, to the design of a conveyor belt presented in this document.

2010 | KKT: Linear Motor- [PI 0923573-6]: "The linear motor is configured by the inclusion of a line of external permanent magnets, arranged by the disposition of arched permanent magnets to be adjacent to each other in a way that the magnetic poles of the permanent magnets are rotated by a maximum of 90° in relation to the other permanent magnets, in a cross-sectional view including central axes of the permanent magnets, a magnetic field including a line of internal permanent magnets, having magnetization vectors whose radial directional components are directed in the same directions as those of the line of external permanent magnets, and whose axial directional components are directed in directions opposite to those of the line of external permanent magnets, an armature including a molded three-phase coil as a ring, which is supported between the line of external permanent magnets and the line of internal permanent magnets, so as to be movable in an axial direction of the ring, and an excitation device, which causes the armature to generate a predetermined torque. In this way, strong magnetic fluxes can be linked with an armature coil without the use of an iron core, and the magnetic fluxes of the magnetic field are linked with the entire armature coil." This patent is characterized by a tubular linear motor with arched permanent magnets. Designed to work as a generator as well. It should be strongly characterized as an actuator and, therefore, differs from the linear drive proposed for conveyor belts.

2011 | Gillette: Linear Motor and Method of Operation Thereof - [PI 0620835-5]: "The present invention relates to the apparatus and associated systems or methods that include a linear machine with an elongated and axially sliding core element (i.e., a shaft). In one embodiment, the shaft includes at least one radial opening to provide communication of a fluid (e.g., air) between an internal volume of a winding tube containing one or more stationary windings, and each end of the shaft, through a lumen extending axially throughout the length of the shaft. The stationary windings are spaced to allow fluid flow through a plurality of radial openings present in the winding tube. In particular, the circulation of fluid through the windings can provide sufficient cooling to increase the maximum current rating of the machine. Fluid circulation can also provide pneumatic processing capabilities (e.g., vacuum immobilization, blow-off). In an exemplary embodiment, the apparatus can be used to insert tube-and-square type paper separators into battery casings at high speeds." This patent is characterized by a tubular motor composed of a stationary winding and a secondary core consisting of permanent magnets. A system that can axially accelerate a mandrel to operate on a workpiece, track a workpiece, and position the mandrel to operate on it, apply a vacuum pressure to openings in the mandrel to hold at least one object to be manipulated, and quickly reverse the vacuum to a positive pressure to release said object at a predetermined point in the motion profile. Thus, configuring another type of equipment.

2012 | JASTRZEMBSKI JAN PETER: Drive of a conveyor by a linear motor - [DE102011016039A1]: "The method involves turning an endless conveyor belt or an endless conveyor chain of a conveyor belt around deflection devices. The belt or chain is electromagnetically driven by a linear motor in association with soft magnetic secondary parts. The motor is arranged in a stator and between the upper and lower stretches, and the coils (3) of a multi-phase fed system are provided with a two-sided construction piece. The construction part is connected to the secondary parts on the belt to generate force in the feeding direction while preventing normal forces. An independent claim is also included for a belt conveyor comprising linear motors." This patent differs from the proposed invention by the type of motor used (synchronous motor) with ferromagnetic secondary parts, while in the present solution, the secondary plates are made of electrically conductive materials such as aluminum and copper. Thus, configuring another type of equipment.

2013|Whirlpool: System and method for controlling the stroke and operation at resonant frequency of a linear resonant motor - [PI 1103776-8 A2]: "This invention relates to a system and method for controlling the stroke of a resonant linear motor, which was developed to allow a single magnetic flux variation sensor to simultaneously control the operating amplitude of a moving part coupled to a displacer by means of a resonant spring, and the operating frequency of the displacer, resulting in a drive that allows the system to operate at the equipment's mechanical resonance frequency." This patent is characterized by a method of controlling a synchronous linear motor and does not compete with the proposed invention.

2013|JLT: Linear Switched Reluctance Motor/Generator [PI 0717215-0]: "The present invention consists of an electrical machine with linear switched reluctance that can be operated without distinction as a generator or a motor, with a series of characteristics that allow the optimization of the relationship between mass and power, as well as the manufacturing cost. The machine has several air spaces, crossed by a single magnetic flux, in which the magnetic force is obtained. This flux is fed by a set of coils placed in the active parts, where these active parts are two heads in which the magnetic flux closes. There may be other active parts in the mentioned magnetic circuit through which the magnetic flux does not close. A set of passive elements, normally transducers, produce, during movement relative to the other part, a variation in the reluctance of the circuit in relation to the position that causes a magnetic force. The most unique feature of the present invention is that the magnetic flux only returns through the two outermost active parts, which allows for the desired reduction in mass, weight and cost." This patent is characterized by a linear switched reluctance machine aimed at application in energy generation through sea waves and is, therefore, totally different from the proposed invention.

2014|Whirlpool: Linear motor electric drive method - [BR 10 2012 015252-5 A2]: "The invention refers to a novel linear motor electric drive method and, in particular, a drive method electrical signal fundamentally based on the sinusoidal pulse width modulation technique, in which the electrical voltage of the electrical signal comprises at least one quadratic spectrum wave segment and the electrical current of the electrical signal comprises at least one fundamentally sinusoidal spectrum wave segment. " This patent is characterized by a linear motor drive and control method especially based on the sinusoidal pulse width modulation technique, not competing with the proposed invention.

2015 | KKYD: Linear Motor Armature, Linear Motor, and Armature Manufacturing Method - [BR 10 2013 005643-0 A2]: "An armature of a linear motor. The armature includes an armature core with a plurality of teeth arranged linearly and spaced at predetermined intervals and a plurality of coils fitted in adjacent teeth, each of the coils having flange portions, wherein a winding is wound around the coil to form a spiral. At least one of the flange portions of the coil is formed with a first protrusion and a second protrusion. An overlapping section is formed by the first and second protrusions of two adjacent coils that come into contact with or overlap each other." This patent is characterized by a synchronous Linear Motor with an unconventional methodology for winding the coils in the slots of the primary. The secondary is made of permanent magnets. This patent relates to a completely different linear motor manufacturing method than the motor revealed in this document.

2015 | LG: Linear Motor Stator Structure - PI 0105269-1: "The present invention relates to a stator structure of a linear motor, and more particularly, to the stator structure of a linear motor, which is capable of reducing the number of parts and simplifying the assembly structure." This patent is characterized by an assembly of a synchronous linear motor primary. In the stator structure of a linear motor, a coil is wound around a bobbin; a plurality of unitary stacked core elements of a predetermined thickness, each of which is formed by stacking a plurality of laminations formed from thin sheets in a predetermined shape, and radially positioned on the outer circumference of the coil. Consequently, it is possible to reduce the number of parts forming the stator and to simplify the stator structure. Therefore, it is possible to reduce the time to assemble the parts and the processes of assembling the parts, thus improving assembly productivity. Thus, the object of this patent does not compete with the linear drive of conveyor belts revealed in this document.

2017|TKE AG: Linear Synchronous Motor; and use of a Linear Synchronous Motor- [BR 112014013783-8 A2]: "The present invention relates to a linear synchronous motor comprising a long stator, which has coil windings, and a rotor, which in the longitudinal direction of the motor Linear synchronous features a multiplicity of successive magnets." This patent is characterized by a linear synchronous motor with a short inductor (permanent magnets) and long inductor (winding with coils) whose intellectual property exclusively reserves its application for magnetic levitation trains. Therefore, in addition to being characterized by a completely different engine, the application is in an area completely different from the transport of granulated materials on conveyor belts.

2019|Hamilton: Set of linear motor translator and electromagnetic actuator - [BR 102018073495-4 A2]: "This is a set of linear motor translator for use in an electromagnetic actuator, of according to a modality. The linear motor translator assembly comprises: a cylindrical housing having a first end, a second end opposite the first end, a flanged portion at the second end, and a blind hole beginning at the second end and extending into the housing cylindrical to a blind hole base; a tubular body located within the blind hole, the tubular body including a plurality of permanent magnets; and an end cap securely attached to the flanged portion." This patent is characterized by a linear actuator with application in aircraft, therefore, it is not possible to compare it with the application of the linear drive proposed for conveyor belts.

2020|UFRJ: Linear Motor Applied to Transport Vehicles by Magnetic Levitation [PI 1103525-0 B1]: "The linear motor of the present invention presents a configuration in which the position of the secondary is inverted and the same is positioned above the primary that is connected to the vehicle, causing an attraction force or normal force (Fn) between the primary and secondary, which has the same direction as the magnetic levitation force, and thus contributing to the levitation and consequent support of the vehicle. In order for the primary and secondary cores to be frontally exposed, they are mounted on specific supports in order to allow normal efforts to be expressed in a useful way to support the vehicle. The secondary, attached to the permanent road, must face the its magnetic core facing downwards, while the primary one, attached to the vehicle, must have the face of its core facing upwards. The supports that allow this assembly are "C" shaped." This patent is characterized by a linear induction motor with a short primary and long ladder-type secondary (nomenclature of its equivalent "squirrel cage rotor" in rotary engines). assembly of the traction system. This engine has a different secondary than the one proposed in this document, and its applications differ.

1974 | PT Components Inc: Linear motor conveyor - [US3788447A]: "A conveyor using a linear motor has an endless guide support in which the stators of the linear motors are housed. The conveyor segments are hinged in an endless loop for articulating movement, both horizontally and vertically, or both, along the endless path defined by the guide support. The conveyor segments, having an armature portion extending through slots in the guide support, are retained in the guide support in all orientations of the conveyor by laterally extending parts, including a load support part. The conveyor is driven along the guide track by electromagnetic coupling of the stators of the linear motor with the armature portions of the conveyor segment loop." This patent is characterized by a linear conveyor with articulated secondary for vertical and horizontal curves, such secondary plates differ from the current invention both in geometric shape and in attachment to the traveling belt. In this publication, the secondary blade has flat horizontal branches that function as the volume conveyor, while in the proposed invention, the secondary plates are independent of the belt and must be attached to it. Another difference to be noted is that in the described publication, the secondary plates are fixed to each other, constituting a train of links with restrictions on elongation. In the proposed invention, the secondary blade plates are not fixed to each other, allowing elongation of the conveyor belt, which is attached. This differentiation is very important not to restrict the degree of freedom of elongation of the rubber belt conveyor.

1992|HUL: Conveyor belt with built-in magnetic-motor linear drive - [US5088593A] and [US5172803]: "A conveyor has an endless belt extended over the upstream and downstream rollers and with upper and lower sections. The belt has an outer surface adapted to carry a load in the upper section and a lower surface facing inwards. Permanent magnets are fixed to the inner surface of the belt and a linear motor stator is provided under the upper section and juxtaposed with the permanent magnets thereof. The stator and magnets together form a linear motor to advance the upper section downstream. An array of such permanent magnets is embedded in the lower surface of the belt spaced to allow the belt to flex." This patent is characterized by a flat-faced linear belt with a lower ridge. It has permanent magnets mounted both inside the belt and on the lower crest. It differs from the proposed invention in that it uses magnets both for propulsion and in an attempt to levitate its belt.

2011 | Siemens: Conveyor system comprising an electromagnetic brake - [WO2011042487A2]: "The invention relates to a transport system comprising a transport device that can be moved along a substantially vertical path and a linear motor comprising a primary part, arranged in said transport device, and a secondary part arranged along the travel path. The primary part has a primary winding and at least one permanent magnet, and the secondary part has a profile in the direction of the travel path, comprising grooves and teeth alternately arranged. In order to increase operational safety, a brake winding is arranged in the secondary part so that it can generate a braking force interacting with the permanent magnet, to brake said transport device." This patent is characterized by a transportation system for vertical movements, driven by a linear motor, comprising a primary part consisting of a winding and a magnet, and a secondary part arranged along the path with grooves and teeth. It also includes a brake. It differs by using magnets to complete the magnetic circuit.

2013|BG: Sorting system with linear synchronous motor drive - [US8502422B2]: "The present invention relates to a sorting system including a conveyor comprising a plurality of carts for transporting articles, in particular for sorting articles such as luggage packages and calibrators. The conveyor has a linear synchronous motor drive system with stators arranged along a track that the carts follow. The reaction elements are mounted on each of the carts. Each of the reaction elements comprises an odd or even number of permanent magnets arranged in a plate-shaped support. The magnets in reaction elements of adjacent carts are arranged to form an arrow of magnets with alternating polarity, said row having two neighboring magnets. At least one of the two neighboring magnets has a reduced dimension in the direction of transport and the two neighboring magnets are situated at a transition between adjacent carts." This patent is characterized by a system for classifying or separating objects characterized by transporting articles via a linear conveyor moved by a synchronous linear motor whose stator is distributed along the path. It uses magnets on the conveyor plates, differing from the drive proposed in this invention.

2014|Syntegon Technology GmbH: Method for operating an electromagnetic transfer system, and transfer system - [US9061838B2]: "The invention relates to a method for operating an electromagnetic transfer system that is used to transport items to a conveyor device downstream, and comprising a transport path, preferably designed to be closed, in which there is at least one movable transport element for an item that is moved along a transport surface by said transport element, said element transport element having at least one permanent magnet element which is arranged to be operatively connected to individually energizable inductor coils which are disposed along the transport path. Position sensing means are provided for determining the position of the transport element in said transport path. of transport and, in a delivery region, the item is delivered from the transport surface to the downstream conveyor device, said conveyor device having a separate drive. According to the invention, in order to reduce the spacing between individual items in the downstream conveyor device, the conveyor speed of said conveyor device is intermittently reduced at the point of delivery from the conveying surface to the conveyor device, relative to the speed of the conveyor element and/or the speed of the conveyor element is increased at the delivery point relative to the conveyor speed of the conveyor device. " This patent is characterized by an electromagnetic transfer method between conveyors. It consists of a magnetic coupling between the carrier belt and the load. It does not operate with a linear motor and, therefore, does not compete with the proposed invention.

### BRIEF DESCRIPTION OF THE FIGURES

The entire system can be better understood through the following detailed description, in accordance with the attached figures, where:

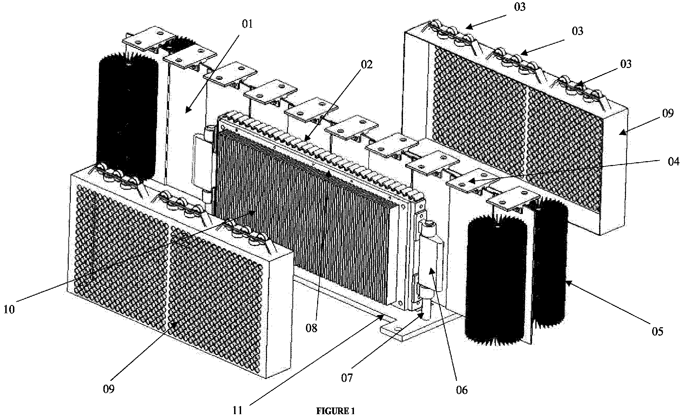

- **FIGURE 1** shows an overview of the linear induction motor of this invention, which has the parts called the secondary , copper windings of the primary (02), lateral and upper protection rollers , secondary (04) fixing parts , secondary (05) bristle cleaner, deflector for the secondary (06) plates, fixing shaft of the primary (07) faces, iron core of the primary (08), protection boxes (09), heat sink (10), and motor base fixing structure (11);

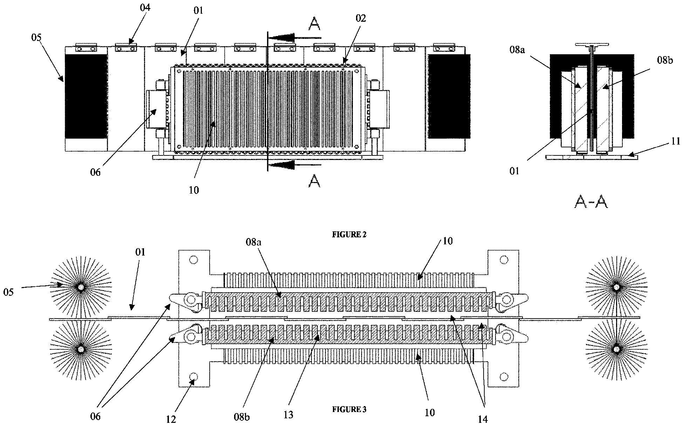

- **FIGURE 2** shows a side view of the motor with a cross-section AA where we observe that the primary has two faces (08a) and (08b) on both sides of the secondary ;
- **FIGURE 3** illustrates a top view with the essential components of the motor in which it is possible to visualize the hatched cores of the primary faces (08a) and (08b), as well as the slots in the primary iron core (13) where the copper windings (02) are housed, and also the secondary of the overlapped type sectioned. In this view, it is possible to see the air gap between the secondary and the faces of the primary (14), and the fixing holes (12) of the motor base structure;

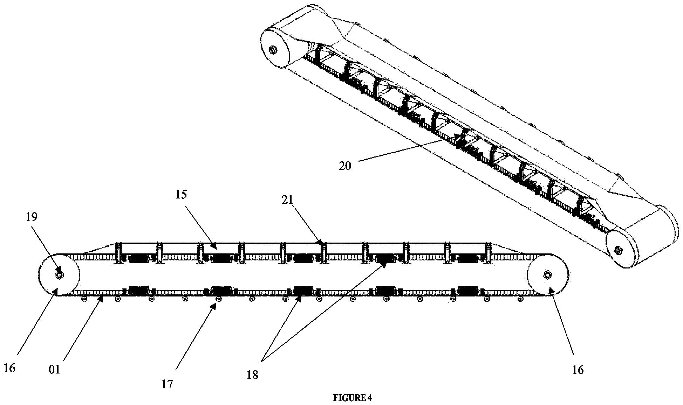

- **FIGURE 4** shows the linear drive being applied to a linear belt conveyor where the following can be seen: the belt canvas (15), the return drums of the loop (16), the return rollers (17), the primary units (18) distributed along the conveyor, the return drum shaft (19), and the structure of the load rollers that support the belt (20) and the load rollers (21);
- **FIGURE 5** shows the type of overlapped (22) where the plates form an overlapping and interleaved train to allow the blades to accommodate during the curve on the return drum. In this configuration, the secondary has a thickness of 2 plates, as can be seen in the views drawn in this **FIGURE**;
- **FIGURE 6** shows the type of secondary where there is no plate overlap, but rather a linear train of trapezoidal blades of the secondary. In this configuration, the secondary has the thickness of a single plate.

### DESCRIPTION OF THE INVENTION

The linear drive for continuous bulk material conveyors needed to be developed to solve the problem of conventional conveyors that use rotary drive motors on their head pulleys. Such a conventional solution requires high belt tension to prevent slippage on the drive drum. These high mechanical tensions result in various problems for the equipment's operation, causing wear, inefficiencies, and operational safety risks.

The invention shown here solves the problem of localized motorization and proposes the use of linear motor units along the length of the conveyor to achieve the power required for the equipment's load transportation.

The proposed linear drive is based on linear induction electric motors, which, in this case, are arranged in the short double-faced primary configuration in which two linear motor units are positioned against each other (08a and 08b), leaving a free gap between them for the passage of the inducted element.

The primary is the part of the electric motor that contains the winding of the phases in the form of coils that are installed in the slots of its laminated iron core, forming the motor's poles.

The element undergoing induction generated by the field modulation in the windings of the primary is called the secondary, and in this case, it must necessarily be constructed with conductive materials such as copper or aluminum.

The invention also proposes two options for this secondary , since, in the use in linear conveyors, the secondary element must allow loop movement accommodating itself on the return drums located at the head of the conveyors during curves. Thus, the two options are:

An overlapped section secondary , where the sections are justified to facilitate the flexibility of the conveyor belt and it must be overlapped to allow continuity of the active area and perform curves on the drum without deforming, as illustrated in figure 5. With this overlap, the area seen by the primary is constant and without gaps, thus achieving greater efficiency and smooth movement. A disadvantage of this configuration is that the total thickness of the secondary is that of two plates, which increases the gap between the active faces of the primary of the motor.

The second type is a trapezoidal section secondary, where the sections are justified by the flexibility of the conveyor belt and have a trapezoidal shape to allow curves on the return drums, as shown in figure 6. Since there is no overlap of plates in this case, the thickness of the secondary is the same as that of the plate used, allowing a shorter distance between the active faces of the primary. However, due to the trapezoidal shape of the plate, there is a loss of active area when the secondary is in the region of the primary, causing lower efficiency and vibrations due to the variation between the upper and lower areas of the secondary blade.

The proposed invention stands out from others by the use of a double-faced induction motor with an aluminum secondary in the application of linear conveyors, where no compatible examples were found in the searches for prior art.

The activation and control of the motor units are carried out through frequency inverters that act on the current modulation in the coils of the primary, generating a traveling wave in the different motor poles. This traveling field in the gap region between the active faces of the primary generates induced currents on the faces of the secondary made of conductive material. The interaction between the fields generated by the currents of the primary and the secondary generates forces in the direction of movement of the plate train.

The use of several linear motor units, distributed along the length of the conveyor with synchronized drive, prevents slippage of the secondary, which is attached to the conveyor belt , and thus makes it unnecessary to use tensioners and high mechanical tension loads on the belt. This fact improves energy efficiency and reduces loads on support elements such as rollers and bearings.

Another advantage of the invention is to increase the availability of conveyors because if there is a failure in any electric motor unit, its load can be redistributed to the other motors in operation. Thus, the defective unit can be replaced without shutting down the conveyor due to no mechanical contact between the parts.

The invention of this type of distributed drive with segmented secondary that allows accommodation on return drums also solves the problem of unidirectional movement existing in conventional conveyors with rotary motors. Such equipment, to generate movement in two directions, required a motor assembly on both drums of the conveyor and the need to reposition tensioners or tensioning devices for flexible belts so that the conveyors always operated in traction (pulling the belt). With the distributed linear drive proposed, conveyors can benefit from driving in both directions without the need for physical modifications to the equipment. This is because the tension in the belt is distributed, preventing the "wrinkling" of the belt.

Operation in the transport of granular loads such as stones, ores, sand, wood, or food requires special attention, as these materials can easily contaminate the elements of an electric motor. In the case of conventional motors, the penetration of dust or grains inside would be fatal to the motor. In the proposed invention, the linear induction motor tolerates the presence of dirt better due to the greater space between the secondary plates and the active face of the primary. Additionally, the invention features bristle cleaners or scrapers to remove larger debris, deflectors at the entry and exit of the primary to direct the primary plates and a protective box to reduce the volume of contaminating material that may enter the primary. All this equipment is designed to facilitate the assembly and maintenance of the motor, and can be easily removed for cleaning.

Such linear drive applies to horizontal or vertical conveyors with flexible rubber or metallic for the transport of granulated materials.

Deflectors are strategically positioned elements to prevent misalignment of the secondary, ensuring that its plates will pass in the central region of the primary without touching the inner faces. This device consists of two plates positioned bilaterally like a nozzle that directs the secondary train into the primary of the motor to centralize this element and prevent possible collisions. The deflector material should not cause damage to the secondary plates and should be constructed to allow practical replacement when necessary.

Another alignment/protection device is the rollers (03) located on the top of the box (09). Their presence is necessary because the motor is positioned in the space between the rollers of the conveyor. In this region, there is the possibility of forming a "belly" or sag deformation of the conveyor belt due to the action of the transported load. This catenary curve can cause the top of the secondary (01) to collide vertically with the body of the primary or its protective box. These rollers then prevent this collision and allow continuous movement of the belt and secondary. The rollers should be constructed of materials that do not degrade the secondary, such as engineering plastics or composites, and equipped with bearings for rotation during contact.

The entire length of the internal faces of the primary must be resin-coated with a fiberglass cover. This promotes protection against unwanted collisions, touches from the secondary, and also protects the motor from water, allowing it to operate in the open under rain.

Since the motor is continuously on for extended periods, it is equipped with finned aluminum heat sinks (10) promoting heat exchange by natural or forced convection depending on the ambient temperature of the operating location.

The fixation of each secondary (04) blade is done independently on the conveyor belt, allowing freedom for its elongation and not restricting the elastic behavior of the conveyor. In flexible belt conveyors, longitudinal elongation is normal due to operational loads and thermal expansion during operation. The train of secondary plates of the motor is fixed directly to the body of the belt through screws and cannot in any way prevent the expansion or elongation of the belt, as this would result in high mechanical tension on the motor secondary, leading to its breakage.

## Claims

1. **"LINEAR DRIVE FOR CONTINUOUS BULK MATERIAL CONVEYING DEVICE", characterized by** linear induction electric motors unit short primary (18) double-sided stationary and distributed along the continuous transportation with a long and segmented movable secondary (01) manufactured in the form of conductor material blades, as aluminum or copper, grouped in the form of train with overlapping blade (22) or in trapezoidal shape (23), without overlapping, which passes longitudinally between the faces of the primary for use in equipment that operates in a movement loop; It also has guide elements that act to prevent collision of the secondary blades on the primary faces (03) (06); secondary blade (05) cleaning elements, independent fixings for each secondary blade (04), finned heat sinks (10) on the back of the primary elements, debris protective box (09) and insulation on the active face of the primary.

2. "LINEAR DRIVE FOR CONTINUOUS BULK MATERIAL CONVEYING DEVICE", according to claim 1, **characterized by** a double-sided linear induction electric motor with a short primary (18) that uses a sectioned secondary made of conductive material such as aluminum or copper distributed in a train with overlapping pieces according with fig (22).

3. "LINEAR DRIVE FOR CONTINUOUS BULK MATERIAL CONVEYING DEVICE", according to claim 1, **characterized by** a double-sided induction linear electric motor with a short primary (18) that uses a sectioned secondary made of conductive material such as aluminum or copper in trapezoidal shape (23) distributed in a train.

4. "LINEAR DRIVE FOR CONTINUOUS BULK MATERIAL CONVEYING DEVICE", according to claim 1, **characterized by** independent fixings (04) of each secondary blade on the conveyor belt (15), as described in paragraph (68) of descriptive report.

5. "LINEAR DRIVE FOR CONTINUOUS BULK MATERIAL CONVEYING DEVICE", according to claim 1, **characterized by** using secondary blade train alignment elements such as the blade deflector (06) at the primary entrance and the rollers upper parts (03) that serve as a stop for the fastening parts (04) when there is a deflection arrow on the conveyor belt preventing the impact of the fastening parts on the protection box, as described in paragraph (064) and (065) of the specification.

6. "LINEAR DRIVE FOR CONTINUOUS BULK MATERIAL CONVEYING DEVICE", according to claim 1, **characterized by** having cleaners (05) for the secondary plates, reducing the entry of debris into the active region of the primary.

7. "LINEAR DRIVE FOR CONTINUOUS BULK MATERIAL CONVEYING DEVICE", according to claim 1, **characterized by** using heat sinks (10) installed on the external back of the primary, promoting heat exchange with the operating environment; It may or may not have a fan to force heat exchange by convection.

8. "LINEAR DRIVE FOR CONTINUOUS BULK MATERIAL CONVEYING DEVICE", according to claim 1, **characterized in that** it can use a protection box (09) fixed by screws in the external region of the engine primary, providing a protective cover against debris and grains from the operating environment.

9. "LINEAR DRIVE FOR CONTINUOUS BULK MATERIAL CONVEYING DEVICE", according to claim 1, **characterized by** being compatible with flexible rubber or metal conveyor belts, horizontal and vertical conveyors/feeders on short or long paths as described in paragraph (012) of the descriptive report.
